# EUROPÄISCHE PATENTSCHRIFT

(11) **EP 2 908 948 B1**
(45) Veröffentlichungstag und Bekanntmachung des Hinweises auf die Patenterteilung: **01.04.2020**
(21) Anmeldenummer: 13774175.7
(22) Anmeldetag: 09.10.2013
(51) Int. Cl.: B01J 49/53, B01J 49/60

(54) **VERFAHREN ZUR REINIGUNG VON PHOSPHONSÄURE- BZW. PHOSPHONATGRUPPEN ENTHALTENDEN VERBINDUNGEN**
METHOD FOR PURIFYING COMPOUNDS CONTAINING PHOSPHONIC ACID GROUPS OR PHOSPHONATE GROUPS
PROCÉDÉ DE PURIFICATION DE COMPOSÉS CONTENANT DES GROUPES ACIDES PHOSPHONIQUES OU PHOSPHONATES

(30) Priorität: 16.10.2012 DE 102012218815
(43) Veröffentlichungstag der Anmeldung: 26.08.2015
(73) Patentinhaber: Evonik Operations GmbH, 45128 Essen (DE)
(72) Erfinder: PANZ, Christian, 50389 Wesseling-Berzdorf (DE); MÜLLER, Sven, 53125 Bonn (DE); PELTZER, Jens, 53501 Grafschaft (DE); TITZ, Guido, 52396 Heimbach (DE); MISSELICH, Doris, 50374 Erftstadt (DE); STOCHNIOL, Guido, 45721 Haltern am See (DE); PAULAT, Florian, 25709 Marne (DE)
(74) Vertreter: Evonik Patent Association
(86) Internationale Anmeldenummer: PCT/EP2013/070996
(87) Internationale Veröffentlichungsnummer: WO 2014/060247

(56) Entgegenhaltungen:
- EP-A1- 0 032 263
- EP-A2- 1 186 677
- WO-A1-97/04134
- WO-A1-2012/113657
- US-A1- 2004 213 718

## Beschreibung

Die vorliegende Erfindung betrifft ein technisches Verfahren zur Reinigung von Phosphonsäure- bzw. Phosphonatgruppen enthaltenden Verbindungen, und die Verwendung der mit diesem Verfahren gereinigten Verbindungen im Rahmen der Herstellung von Silizium, insbesondere hochreinem sogenanntem Solar-Silizium, aus Siliziumdioxid und Kohlenstoff.

Der Anteil photovoltaischer Zellen an der weltweiten Stromproduktion steigt seit einigen Jahren kontinuierlich an. Um den Marktanteil weiter ausbauen zu können, ist es unabdingbar, dass die Produktionskosten von photovoltaischen Zellen gesenkt werden und deren Effektivität gesteigert wird.

Ein wesentlicher Kostenfaktor bei der Herstellung von photovoltaischen Zellen sind die Kosten für das hochreine Silizium (Solar-Silizium). Dieses wird großtechnisch üblicherweise nach dem vor über 50 Jahren entwickelten Siemens-Verfahren hergestellt. Bei diesem Verfahren wird Silizium zunächst mit gasförmigem Chlorwasserstoff bei 300-350°C in einem Wirbelschichtreaktor zu Trichlorsilan (Silicochloroform) umgesetzt. Nach aufwendigen Destillationsschritten wird das Trichlorsilan in Anwesenheit von Wasserstoff in einer Umkehrung der obigen Reaktion an beheizten Reinstsiliziumstäben bei 1000-1200°C wieder thermisch zersetzt. Das elementare Silizium wächst dabei auf die Stäbe auf und der freiwerdende Chlorwasserstoff wird in den Kreislauf zurückgeführt. Als Nebenprodukt fällt Siliziumtetrachlorid an, welches entweder zu Trichlorsilan umgesetzt und in den Prozess zurückgeführt oder in der Sauerstoffflamme zu pyrogener Kieselsäure verbrannt wird.

Aus EP 0032263 A1 ist ein Verfahren zur Reinigung von Phosphonsäure enthaltenden Verbindungen bekannt, wobei diese in alkalischem Medium mit einer Hydroxgruppen enthaltenden Verbindung, wie Monosaccharide oder Disaccharide, in Kontakt gebracht wird. Vorzugsweise wird Saccharose in Konzentrationen größer 5 % eingesetzt.

Ferner ist aus WO 2012/113657 A1 ein Verfahren zur Reinigung von Phosphonsäure- bzw. Phosphonatgruppen enthaltenden Verbindungen durch in Kontakt bringen mit einer alkalischen Tartratlösung bekannt.

Eine chlorfreie Alternative zu obigem Verfahren stellt die Zersetzung von Monosilan dar, welches aus den Elementen gewonnen werden kann und nach einem Reinigungsschritt an beheizten Oberflächen oder beim Durchleiten durch Wirbelschichtreaktoren wieder zerfällt. Beispiele hierfür sind in der WO 2005118474 A1 zu finden.

Das auf den oben beschriebenen Wegen erhaltene polykristalline Silizium (Polysilizium) ist für die Herstellung von Solarpanels geeignet (sogenanntes Solar-Silizium) und besitzt eine Reinheit von über 99,99 %. Die zuvor beschriebenen Verfahren sind jedoch sehr aufwendig und energieintensiv, so dass ein hoher Bedarf an kostengünstigeren und effektiveren Verfahren zur Herstellung von Solar-Silizium besteht.

Alternativ wird im Stand der Technik vorgeschlagen, Solar-Silizium mittels carbothermischer Reduktion von Siliziumdioxid herzustellen. Diesbezüglich schlägt zum Beispiel die WO 2007/106860 A1 vor, hochreine Kieselgele durch Umsetzung mit einer hochreinen Kohlenstoffquelle in Solar-Silizium umzuwandeln. Das zur Durchführung derartiger Verfahren benötigte hochreine Siliziumdioxid wird bevorzugt durch Umsetzung einer Silikatlösung mit einem Säuerungsmittel hergestellt, im Rahmen derer ein Ionenaustausch mit Phosphonsäure- bzw. Phosphonatgruppen enthaltenden Verbindungen (Phosphonat-Ionenaustauscher) durchgeführt wird. Problematisch für die Silizium-Herstellung nach diesem ansonsten sehr vorteilhaften Verfahren ist, dass sich dreiund höherwertige Metallionen, wie beispielsweise Eisen(III)-Ionen, nicht wirtschaftlich von den Phosphonat-Ionenaustauschern desorbieren lassen.

Auch für andere industrielle Prozesse, zum Beispiel in der Galvanik, den Aufarbeitungsverfahren für radioaktive Stoffe oder der Abwasseraufbereitung zeigen Chelationentauscher mit phosphonsäurehaltigen Gruppen prinzipiell überragende Anwendungseigenschaften, haben aber den Nachteil, dass sie nach der adsorptiven Aufnahme drei- und höherwertiger Spurenmetalle nicht wirtschaftlich regenerierbar sind.

Dieser technische Nachteil der Phosphonat-Ionenaustauscher, dass sie zwar trivalente Kationen adsorbieren, deren regenerative Desorption aber Schwierigkeiten bereitet und beispielsweise für Eisen(III)-Ionen den Einsatz unökonomisch hoher Mengen spezifischer Säuren erfordert, ist in der Produktinformation über den Phosphonat-Ionenaustauscher Lewatit® TP 260 (Ausgabe 09.12.2011 der Lanxess Deutschland GmbH, D-51369 Leverkusen) auch druckschriftlich belegt.

Aufgabe der vorliegenden Erfindung war es demnach, ein technisches Verfahren zur Reinigung von Phosphonsäure- bzw. Phosphonatgruppen enthaltenden Verbindungen (insbesondere Phosphonat-Ionenaustauschern) von drei- und höherwertigen Metallionen bereitzustellen, das die kostengünstige Wiederverwendung dieser Verbindungen in den zuvor genannten Verfahren ermöglicht.

Diese und weitere nicht ausdrücklich genannte Aufgaben werden erfindungsgemäß entsprechend den Angaben in der Beschreibung, den Beispielen und den Patentansprüchen gelöst.

Bei umfangreichen Untersuchungen wurde unerwartet festgestellt, dass eine effektive Abtrennung drei- und höherwertiger Metallionen von Phosphonsäure- bzw. Phosphonatgruppen enthaltenden Verbindungen gelingt, wenn diese in alkalischem Medium mit Hydroxygruppen enthaltenden Verbindungen in Kontakt gebracht werden.

Die vorliegende Erfindung besteht demnach in einem technischen Verfahren zur Reinigung von Phosphonsäure- bzw. Phosphonatgruppen enthaltenden Verbindungen in Phosphonat-Ionenaustauscher mit Aminomethylphosphonsäure- bzw. Aminomethylphosphonat-Funktionalitäten das dadurch gekennzeichnet ist, dass diese in alkalischem Medium mit Hydroxygruppen enthaltenden Verbindungen in Kontakt gebracht werden, Fruktose oder Glukose als Hydroxygruppen enthaltende Verbindung eingesetzt werden und die Konzentration der Hydroxygruppen enthaltenden Verbindung in dem alkalischen Medium zwischen 1 Gew.% und 4 Gew.% ist.

Unter einer funktionellen Gruppe vom Phosphonsäure-Typ ist eine Struktureinheit der Formel R-P(O)(OH)₂ zu verstehen, bei der R einen beliebigen Rest darstellen kann. Bevorzugt stellt der beliebige Rest R entweder ein Polymer dar oder er ermöglicht - als Brückenglied - eine Verbindung zu einem Polymer. Eine funktionelle Gruppe vom Phosphonat-Typ leitet sich von einer beliebigen funktionellen Gruppe vom Phosphonsäure-Typ dadurch ab, dass eine oder beide der sauren P-gebundenen OH-Gruppen deprotoniert ist bzw. sind; dabei ist von untergeordneter Bedeutung, welches Gegenion bzw. welche Gegenionen die funktionelle Gruppe vom Phosphonat-Typ aufweist; vorzugsweise handelt es sich jedoch um Alkali-Phosphonat-Gruppen, also um Phosphonat-Gruppen mit Alkalimetall-Gegenionen.

Phosphonat-Ionenaustauscher werden zwecks ihrem wiederholten Einsatz bzw. zur Regeneration gereinigt. Gemäß vorliegender Erfindung handelt es sich dabei um chelatisierende Ionenaustauscherharze, die Aminomethylphosphonsäure- bzw. Aminomethylphosphonat-Funktionalitäten enthalten; gemeint sind in diesem Zusammenhang die Struktureinheiten der Formel R-NHCH₂P(O)(OH)₂, wie sie beispielsweise der Ionenaustauscher Lewatit® TP 260 der Firma Lanxess enthält. Außerdem ist die erfindungsgemäße Regeneration auf Ionenaustauscher mit Struktureinheiten der Formel R-NR'CH₂P(O) (OH)₂ gerichtet, bei denen R' außer Wasserstoff ein beliebiger einwertiger Rest ist, der gleich oder verschieden von R sein kann.

Das alkalische Medium, in dem das erfindungsgemäße Reinigungsverfahren durchgeführt wird, unterliegt prinzipiell keinen Beschränkungen. Bevorzugt handelt es sich dabei jedoch um ein flüssiges Medium, das Wasser und/oder einen Alkohol enthält. Der pH-Wert des alkalischen Mediums beträgt mindestens 8, bevorzugt mindestens 10 und insbesondere mindestens 12; in einer speziellen Ausführungsform beträgt der pH-Wert zwischen 13 und 14. Zur Einstellung des pH-Wertes kann prinzipiell jede Base verwendet werden, bevorzugt wird Alkalimetall-Hydroxid und/oder Erdalkalimetall-Hydroxid eingesetzt, insbesondere Natriumhydroxid.

In einer speziellen Ausführungsform liegen eine oder mehrere OH-Gruppen der Hydroxygruppen enthaltenden Verbindung in deprotonierter Form vor, wenn sie zur Durchführung des erfindungsgemäßen Verfahrens verwendet wird.

Es ist erfindungsgemäß von untergeordneter Bedeutung, ob die Hydroxygruppen enthaltende Verbindung oder die zu reinigende Phosphonsäure- bzw. Phosphonatgruppen enthaltende Verbindung oder beide Verbindungen mit dem alkalischen Medium eine homogene Phase, beispielsweise eine Lösung bilden. Die Mischbarkeit der Komponenten mit dem alkalischen Medium ist keine Voraussetzung für die Durchführbarkeit des Verfahrens, kann das Verfahren bzw. den Reinigungseffekt jedoch beschleunigen.

In einer bevorzugten Ausführungsform wird die Hydroxygruppen enthaltende Verbindung als Lösung in dem alkalischen Medium erfindungsgemäß angewendet, also mit der Phosphonsäure- bzw. Phosphonatgruppen enthaltenden Verbindung in Kontakt gebracht. Die Herstellung einer derartigen alkalischen Lösung der Hydroxygruppen enthaltenden Verbindung kann prinzipiell nach allen dem Fachmann bekannten Verfahren erfolgen. Bevorzugt wird zunächst das alkalische Medium hergestellt, insbesondere eine wässrige Alkalihydroxid-Lösung, in der anschließend die Hydroxygruppen enthaltende Verbindung gelöst wird, wobei deren Konzentration zwischen 1 Gew.-% und 4 Gew.-% beträgt.

Im Zusammenhang mit den Untersuchungen, die zur Entwicklung der vorliegenden Erfindung geführt haben, hat sich eine unerwartet gute Eignung der erfindungsgemäß gereinigten Verbindungen gezeigt, wenn diese im Rahmen der Herstellung von Silizium aus Siliziumdioxid und Kohlenstoff verwendet werden; dies gilt insbesondere für die Herstellung von hochreinem sogenanntem Solar-Silizium durch carbothermische Reduktion von Siliziumdioxid, bei der eine wirtschaftliche Bereitstellung hochreinen Siliziumdioxids erforderlich ist, die erst durch den Ionenaustausch mit den gereinigten Phosphonaten wiederholbar und mit guten Standzeiten möglich wird.

Das Reinigungsverfahren kann ohne weitere Zusätze durchgeführt werden, bestimmte Additive wie beispielsweise Phasen- oder Lösungsvermittler können jedoch vorteilhaft sein.

Die Vorgehensweise beim Inkontaktbringen der Phosphonsäure- bzw. Phosphonatgruppen enthaltenden Verbindung mit der Hydroxygruppen enthaltenden Verbindung ist erfindungsgemäß von untergeordneter Bedeutung. Die Herstellung des Kontaktes dieser Verbindungen kann prinzipiell in jedem dafür geeigneten Aggregat bzw. Behälter erfolgen. Bevorzugt wird das erfindungsgemäße Verfahren, insbesondere im Falle der Regeneration eines Phosphonat-Ionenaustauschers, in dem Aggregat durchgeführt, in dem die Kontamination der Phosphonsäure- bzw. Phosphonatgruppen enthaltenden Verbindung mit den abzureinigenden Metallionen erfolgt ist; in Bezug auf Phosphonat-Ionenaustauscher ist dies vorzugsweise eine sogenannte Ionenaustauschersäule.

Die Temperatur und der Druck sind bei der Durchführung des erfindungsgemäßen Reinigungsverfahrens von untergeordneter Bedeutung. Normalerweise wird das Verfahren bei Atmosphären- bzw. Normaldruck oder Überdruck durchgeführt; es ist aber auch möglich, das Verfahren bei Unterdruck durchzuführen. Die Temperatur des alkalischen Mediums beträgt bei der Durchführung des Verfahrens bevorzugt mindestens 20°C, insbesondere mindestens 30°C; eine erfindungsgemäße Reinigungswirkung wird aber auch bei niedrigeren Temperaturen erreicht. Die Dauer der Anwendung des Verfahrens beeinflusst naturgemäß den Reinigungseffekt und ist demgemäß auf die angestrebte Reinigungswirkung hin anzupassen; sie kann von wenigen Sekunden bis hin zu mehreren Stunden betragen.

Zur Vorbereitung und/oder Nachbereitung der Durchführung des Verfahrens kann ein Waschen der Phosphonsäure- bzw. Phosphonatgruppen enthaltenden Verbindung mit vollentsalztem bzw. destilliertem Wasser vorteilhaft sein.

## Patentansprüche

1. Verfahren zur Reinigung von Phosphonsäure- bzw. Phosphonatgruppen enthaltenden Verbindungen in Phosphonat-Ionenaustauscher mit Aminomethylphosphonsäure- bzw. Aminomethylphosphonat-Funktionalitäten, **dadurch gekennzeichnet, dass** diese in alkalischem Medium mit einer Hydroxygruppen enthaltenden Verbindung in Kontakt gebracht werden und Fruktose oder Glukose als Hydroxygruppen enthaltende Verbindung eingesetzt werden und die Konzentration der Hydroxygruppen enthaltenden Verbindung in dem alkalischen Medium zwischen 1 Gew.% und 4 Gew.-% ist.

2. Verfahren nach Anspruch 1 , **dadurch gekennzeichnet, dass** das alkalische Medium flüssig ist und Wasser und/oder einen Alkohol enthält.

3. Verfahren nach einem der Ansprüche 1 bis 2, **dadurch gekennzeichnet, dass** der pH-Wert des alkalischen Mediums mindestens 12 beträgt.

4. Verfahren nach einem der Ansprüche 1 bis 3, **dadurch gekennzeichnet, dass** die Hydroxygruppen enthaltende Verbindung als Lösung in dem alkalischen Medium mit der Phosphonsäure- bzw. Phosphonatgruppen enthaltenden Verbindung in Kontakt gebracht wird.

## Claims

1. A method for purifying compounds containing phosphonic acid and/or phosphonate groups in phosphonate ion exchangers with aminomethylphosphonic acid and/or aminomethylphosphonate functionalities, **characterized in that** they are contacted in alkaline medium with a compound containing hydroxyl groups, and fructose or glucose are used as a compound containing hydroxyl groups, and the concentration of the compound containing hydroxyl groups in the alkaline medium is between 1 wt% and 4 wt%.

2. Method according to Claim 1, **characterized in that** the alkaline medium is liquid and comprises water and/or an alcohol.

3. Method according to either of Claims 1 and 2, **characterized in that** the pH of the alkaline medium is at least 12.

4. Method according to any of Claims 1 to 3, **characterized in that** the compound containing hydroxyl groups is contacted as a solution in the alkaline medium with the compound containing phosphonic acid and/or phosphonate groups.

## Revendications

1. Procédé pour la purification de composés contenant des groupes acide phosphonique, respectivement, des groupes phosphonate dans des échangeurs d'ions phosphonate comportant des fonctionnalités acide aminométhylphosphonique, respectivement, aminométhylphosphonate, **caractérisé en ce que** ceux-ci sont mis en contact dans un milieu alcalin avec un composé contenant des groupes hydroxy et du fructose ou du glucose est utilisé en tant que composé contenant des groupes hydroxy et la concentration du composé contenant des groupes hydroxy dans le milieu alcalin étant comprise entre 1 % en poids et 4 % en poids.

2. Procédé selon la revendication 1, **caractérisé en ce que** le milieu alcalin est liquide et contient de l'eau et/ou un alcool.

3. Procédé selon l'une des revendications 1 et 2, **caractérisé en ce que** la valeur de pH du milieu alcalin est d'au moins 12.

4. Procédé selon l'une quelconque des revendications 1 à 3, **caractérisé en ce que** le composé contenant des groupes hydroxy, en tant que solution dans le milieu alcalin, est mis en contact avec le composé contenant des groupes acide phosphonique, respectivement, des groupes phosphonate.
